# EUROPEAN PATENT APPLICATION

(11) **EP 2 741 171 A1**
(43) Date of publication of application: **11.06.2014**
(21) Application number: 12400051.4
(22) Date of filing: 06.12.2012
(51) Int. Cl.: G06F 3/01, B64C 13/04

(54) **Method, human-machine interface and vehicle**

(71) Applicant: AIRBUS HELICOPTERS DEUTSCHLAND GmbH, 86609 Donauwörth (DE)
(72) Inventor: Kreitmair-Steck, Wolfgang, Dr., 80538 München (DE); Van Noort, Benno, 81369 München (DE)
(74) Representative: Schmid, Rudolf

(57) **Abstract**

The invention relates to control for a human-machine interface (F) in a vehicle (A), proposing touch-free gesture instructions. The human-machine interface (F) has visual display means (2), human operated control devices (5-10; 19-23) and a computer system (B).

Said human-machine interface (F) is having human operated control devices of the touch-free type, named instant location capture means (19-23) and is capable to recognize gestures made by a body part (3-4) of a human user, without the need of touching a corresponding human operated control device, so as to perform pointing / selection / actuation of controlling functions reflected onto corresponding visual display means (2).

This touch-free gesture control typically applies e.g. to vehicles such as aircrafts like rotary wing aircrafts.

## Description

The invention concerns notably a method, a human-machine interface and a vehicle.

The most general technical domain of the invention is the domain of the controlling arrangements. The invention relates more precisely to controlling interactive arrangements, also called human-machine interfaces (known under the acronym HMI).

In the non limitative examples, the invention concerns a touch-free controlling for a human-machine interface in an aircraft.

But among examples of industrial application of the invention are human-machine interfaces for various machines, including automotive driving decks, ship command bridges, submarine crew posts, train control cabins, aircraft cockpits, spacecraft controls or industrial machine operating desks such as crane control arrangements.

In the past years, most of the traditional human-machine interfaces have been equipped with interactive visual displays. Control devices of the tactile type are interactively connected to these displays, onto which a focal point reference mark, i.e. a cursor mark, is movable thanks to the tactile control device, while target locations such as icons or the like are visualizing associated controlling functions on the display. The control device allows for pointing the target location with the focal point reference mark for selecting and / or activating the associated controlling function.

Indeed, said displays allow flexible content. While being broadly used and practical in many applications, control devices of the tactile type are sometimes not convenient. For instance, tactile devices are sometimes not capable of providing fast enough response and are unpractical / uncomfortable.

Moving a cursor mark by control devices of the tactile type even by touch pads can be very time consuming, especially if the user need to move this cursor mark from one side of the screen to the other side. For instance, when the user is a pilot which already has hands occupied with piloting tasks, the less distant movements required for controlling the human-machine interface, the better it is.

Moreover, physically operated pointing devices may be cumbersome or inappropriate for the surrounding human-machine interface post, while in numerous applications the environment of the human-machine interface or the structure of the machine to be controlled is antagonist to addition of hardware.

Besides, in many applications such as aircrafts, the visual displays are more and more numerous onboard and the positioning of the displays is diversifying. This is barely compatible with known physically operated pointing devices.

Willingly, such visual displays are not only located in front of the human user of the human-machine interface. Also lateral location of visual displays, as well as in greater distances from the user (e.g. in a windshield) and / or in smaller distances (e.g. as a helmet mounted display) are up-to-date. Such locations are therefore out of the comfortable reach of the user (e.g. an arm /hand, etc.). This too is barely compatible with known physically operated pointing devices.

As mentioned above, the classical physically operated pointing devices for moving a cursor mark and activating control functions are fussy to operate, especially in the context of a cockpit where it is important to instantly activate some functions or to immediately change the content of the displayed information. One solution to this problem has been the introduction of physical line select keys around a display to have more direct and quicker way to activate menu functions. But this requires additional hardware (i.e. the line select keys) and the keys need to be in the reachability of the arm of the user.

Gesture control for computer screens has been introduced recently.

Efficient computer vision algorithms have been developed in order to localize objects within a certain scene in three dimensions by help of two or more digital video cameras (See: http://en.wikipedia.org/wiki/Digital camera). These algorithms contain preprocessing procedures (exposure correction, color balancing, noise reduction, increasing sharpness, etc.) in order to prepare the video image for the image processing steps, the motion filtering step, the feature detection step, as well as the geometric feature interpretation step. Especially for stereoscopic vision, i.e. image capture by two cameras whose viewing axes are essentially parallel and that have different geometric positions, a number of fast algorithms have been developed for image recognition and scene reconstruction.

The document US6204852 describes a video gesture-based three-dimensional computer interface system that uses images of hand gestures to control a computer. The system tracks motion of the user's hand or an elongated object or a portion thereof in a three-dimensional coordinate system with five degrees of freedom. The system contains multiple cameras. These cameras are not used to obtain a depth image of the scene. Instead, every camera image is processed independently, and the location of the finger is located in both of the cameras. The location of the finger is next located by the geometry between the cameras and the finger's location in each image. The orientation of the finger is determined in a similar manner. The method is intended to be used for applications with a pointing finger. Furthermore, if multiple fingers are used in the gesture, the method may not be able to unambiguously determine the corresponding fingers in each image.

The document US7340077 describes a gesture recognition system using depth perceptive sensors. This document describes how three-dimensional position information is used to identify the gesture created by a user's body part of interest. At one or more instances of an interval, the posture of a body part is recognized, based on the shape of the body part and its position and orientation. The postures of the body part over each of the one or more instances in the interval are recognized as a combined gesture. The gesture is classified for determining an input into a related electronic device.

The document US20120169583 describes scene profiles for non-tactile user interface. This document describes a method, including capturing an image of a scene including one or more users in proximity to a visual display coupled to a computer executing a non-tactile human-machine interface, and processing the image to generate a distinct profile for one or each of the users. This document describes a system to collect and implement the data, but the final goal is not compatible with some demanding applications such as aircraft piloting or the like. In some examples, instead of using video cameras the gesture recognition could also be based on the application of lasers.

The document EP2361832 describes a cockpit for an aircraft. This cockpit, particularly for a helicopter, has transparent extensions to a dashboard for displaying various control information for flight operation. The transparency of the extensions is changeable depending on flight operations and environmental needs, either automatically or via pilot commands.

### Objectives of the Invention.

The objectives of the invention propose a comfortable operating of the a human-machine interface functions of one /many synchronized visual displays, in an ergonomic way which would be suitable for example for the driving / piloting / conducting of automobiles, aircrafts, trains, ships and like industrial vehicles.

Another objective of the invention is to provide a control for highly demanding multi-display human-machine interface, which is capable to recognize gestures of a human user (pilot / driver /navigator) without the need of touching the display to perform activation functions.

This objective is achieved with a touch-free gesture control according to the present invention e.g. for aircrafts, ships, trains, and automobiles.

### Summary and advantages of the Invention.

So as to reach the above, the invention has various objects which are defined by the appended claims.

An object of the invention is a method of executing controlling functions of a human-machine interface for a vehicle. Said human-machine interface including: visual display means onto which controlling functions are visualized, human operated control devices for enabling human actuation of at least an associated controlling functions, by at least a human user of the human-machine interface and a computer system. Said computer system includes a processing unit, a non-transitory computer-readable unit containing a software program for executing instructions-commands. For enabling actuating of said controlling functions, said human operated control device is operated via a body part of said human user.

As per an embodiment the method associates at least a predetermined controlling function to at least a corresponding controlling gesture of at least a hand of said human user; said human-machine interface including instant location capture means for touch-free monitoring gestures of said hand and being logically connected to said computer system; said instant location capture means performing a computer vision of said hand controlling gesture based upon which said computer system is executing a computer vision algorithm in said software program, while knowing an exact 3D position of each instant location capture means. This embodiment including:
- calculating geometrical position data of said gesture of the hand relatively to said exact 3D position;
- from said calculated geometrical position data, presenting a focal point reference mark on an target location onto at least one convenient visual display means among all the visual display means;
- when at least an associated controlling function which is virtualized on said convenient visual display means is in coincidence with said focal point reference mark, recognizing from said calculated geometrical position data whether or not said gesture of the hand is a controlling gesture to be interpreted as the associated controlling instruction; and
- if said gesture of the hand is recognized as said associated controlling gesture, interpreting said gesture into corresponding controlling instructions for the human-machine interface.

Advantages of this method allows for a touch-free human-machine interface which is ergonomic, fast enough for real-time response, compatible with multi visual displays of various type, size and location. With hand gesture interpreted into control instructions mainly based upon vision by the touch-free instant location capture means, the invention aims offering a simple, reliable and compact in size interface control. The method as per the invention avoids adding tactile human operated control devices like buttons or switches near the displays. Such a human-machine interface touch-free control should possibly be at least as economical and safe than prior art control devices.

Thus the invention allows for a touch-free control of functions offered through computer visual display(s). It does not matter on which location and in what distance the display is located with respect to the human-machine interface user (driver / pilot /operator). This means that the visual display can be out of reach for the hands of the human-machine interface user, e.g. when it is at a distance of more than arm length, or it is too close to this user as in the case of a helmet-mounted display.

In an embodiment, this method proposes that an ACTIVATE POINTING FOCUS gesture is monitored remotely by said instant location capture means with:
- a thumb of said hand oriented up,
- an opposed finger of said hand stretched out pointing at said target location onto said convenient visual display means; and
- remaining opposed fingers folded and turned inwards a palm of said hand (3-4).

This ACTIVATE POINTING FOCUS gesture being associated to a controlling instruction provoking micro-movements of the focal point reference mark for fine-tuning of the position of this focal point reference mark on the convenient visual display means.

In an embodiment, this method proposes that an OKAY gesture is monitored remotely by said instant location capture means with:
- a thumb of said hand oriented up and
- opposed fingers of said hand folded and turned inwards a palm of said hand (3-4)

This OKAY gesture being associated to a controlling instruction provoking a validating actuation of a controlling function corresponding to the visualized target location on the convenient visual display means (2) in register with said focal point reference mark (17-18).

In an embodiment, this method proposes that said calculating of geometrical position data is made only for gestures of the hand made within a predefined motion box, the predefined motion box defining a finite volume in an environment of said human-machine interface into which finite volume said gesture of the hand has to occur to be considered by said instant location capture means as an associated control instruction to be interpreted.

A noticeable advantage of this embodiment is to be compatible with strict free space restrictions encountered in tiny or cramped environments, e.g. like rotary wing aircrafts cockpits which sometimes offers only little room around the pilot, so that control gestures are limited in amplitude by the surrounding equipments and structure.

In an embodiment, for at least one associated controlling function, a predetermined still duration is measured by the method by comparison of at least two series of lastly calculated geometrical position data; said gesture of the hand being interpreted as a controlling instruction if such data remains stable until said predetermined still duration is elapsed, thus signifying that only negligible hand gesture occurred during said predetermined still duration.

In an example, said associated controlling function involves that an elapsed predetermined still duration is to be interpreted as a selecting controlling function.

In another example, said associated controlling function involves that an elapsed predetermined still duration is to be interpreted as a predetermined non-activity - non-movement period, such that the method provokes an outstanding projecting focal point reference mark to disappear from onto said convenient visual display means.

A noticeable advantage of this embodiment is to further enhance visual legibility readability, by keeping projected only the useful focal point reference marks onto each convenient visual display means. Another noticeable advantage of these embodiments is to offer for some predetermined function control a fully non tactile command, involving minimum gesture for the user, this being useful e.g. in a very cramped environment like a helicopter cockpit.

In an embodiment, said human-machine interface is further having at least one human-operated control device in the form of a human operated control system with at least a touch activation switch; said method including a back-up function for micro-movements of the focal point reference mark operated via a tactile actuation by said user of said human operated control system.

A noticeable advantage of this embodiment is to offer for some predetermined controlling functions, a mainly non tactile and precise command which can be magnified in priority, thanks to a simple and quick user movement of small amplitude.

In an embodiment, said human-machine interface is further having at least one human-operated control device in the form of a human operated control system with at least a touch activation switch; said method including a final validation stage operated via a tactile activation by said user of said human operated control system, finalizing said interpreting into controlling instructions for the human-machine interface.

A noticeable advantage of this embodiment is to offer for some predetermined / pre selected function(s), a (contactless) non tactile final command through which controlling function(s) can be quickly launched and executed thanks to a simple tactile (contacting / haptic) human action of small amplitude. Thus, this method proposes that said instant location capture means are performing a computer vision recognizing e.g. at least one controlling gesture chosen among: a POINTING gesture, a ZOOM IN / ZOOM OUT gesture, a ROTATE gesture, a MOVE LEFT/MOVE RIGHT gesture, a MOVE UP/MOVE DOWN gesture, an ACTIVATE POINTING FOCUS gesture, an OKAY gesture. This allows offering an ergonomic and responsive choice and selection process, for numerous different function controls, e.g. some frequent / sensitive controlling functions.

In an embodiment, said method is for pointing and controlling said Human-Machine Interface virtually.

A noticeable advantage is e.g. to offer similar environment for both a real onboard human-machine interface and the corresponding virtual interface. This is useful for training users to this human-machine interface, but also for conception, testing or updating of a real human-machine interface.

Another object of the invention is a human-machine interface for a vehicle. Said human-machine interface includes: visual display means onto which controlling functions are visualized, human operated control devices for enabling human actuation of at least an associated controlling functions, by at least a human user of the human-machine interface and a computer system. Said computer system includes a processing unit, a non-transitory computer-readable unit containing a software program for executing instructions-commands. For enabling actuating of said controlling functions, said human operated control device is operated via a body part of said human user.

In an embodiment, said human-machine interface is operated according to the above method.

In an example, at least a predetermined controlling function is associated to at least a corresponding controlling gesture of at least a hand of said human user. Said human-machine interface includes instant location capture means for touch-free monitoring gestures of said hand, said instant location capture means being logically connected to said computer system. Said instant location capture means perform a computer vision of said hand controlling gesture based upon which said computer system is executing a computer vision algorithm in said software program, while knowing an exact 3D position of each instant location capture means. Thus, if said gesture of the hand is recognized as one of said associated controlling gesture(s), said computer system is interpreting this gesture into corresponding controlling instructions for the human-machine interface.

A noticeable advantage of this embodiment is to allow a highly secured, reliable and rapid interfacing, e.g. for demanding applications such as in aircrafts e.g. in helicopters and the like.

An embodiment this human-machine interface is having at least one physically human operated gesture control system device with at least one touch activation switch. Said human physically operated gesture control system device is being arranged so as to allow for at least one controlling function of said human-machine interface to be executed on tactile activation by said user of said physically human operated gesture control system device for implementing at least one final corresponding validation function of said human-machine interface by user activation.

A noticeable advantage of this embodiment is to offer secured and quickly responsive control(s) for numerous different controlling function(s).

An embodiment said instant location capture means is having at least: two cameras including a camera overhead, and an outer lateral camera. Said cameras being in lateral stereoscopic position.

A noticeable advantage of this embodiment is to allow for a limited space occupation on one side of the user (opposite the one where is located the lateral camera) with maximum front view. This is useful e.g. for side-to-side multi-user posts, where the lateral camera can be positioned between two adjacent posts, such as in some aircrafts.

An embodiment of said instant location capture means is having at least: two cameras including a camera overhead, and an inner lateral camera. Said cameras are in stereoscopic position.

A noticeable advantage of this embodiment is to allow for a limited space occupation and visibility on an outer side of the user, while the overhead camera can be integrated into existing equipment, such as into an upper front cockpit structure ahead a user post, such as in some aircrafts e.g. having a panoramic windshield.

An embodiment proposes that instant location capture means is having two cameras including at least: a lateral camera in lateral position, and a frontal camera in frontal position, said cameras being stereoscopic position.

A noticeable advantage of this embodiment is to optimize existing equipments allowing front location of the front camera e.g. in a dashboard and the lateral camera in a structure of the vehicle. This is useful e.g. for adapting the HMI in existing vehicles.

An embodiment provides for instant location capture means including at least: two cameras both in overhead/top stereoscopic position. This is useful e.g. for some rescue aircrafts where outside visibility is essential.

An embodiment this human-machine interface proposes that instant location capture means is including at least: two cameras both in frontal stereoscopic position.

A noticeable advantage of this embodiment is to allow for a limited bilateral space occupation on both sides of the user, e.g. when the cameras can be integrated into existing front equipment.

An embodiment provides instant location capture means including at least: a set of optical cameras chosen among: human visual spectrum, and/or infrared range of spectrum cameras.

Mixing different types of cameras is useful in working conditions where visibility may be sometimes essential, e.g. for piloting aircrafts in various weather conditions / missions types (rescue / night or military for instance). Another noticeable advantage of this embodiment is to allow for an efficient control by only involving compact and e.g. from-the-shelf cameras, possibly useful for night operating conditions of the vehicle.

An embodiment instant location capture means include 3D scanning devices, chosen among: 3D laser scanners, 3D infrared laser scanners, 3D ultrasonic scanners, or 3D radar scanners. A noticeable advantage of this embodiment is to allow for a highly precise scanning with e.g. devices such as laser. With ultrasonic or radar technology, non visible spectrum control is available, possibly useful for tactical operating conditions of the vehicle. Also, such scanners can be useful e.g. in larger vehicle such as trains, boats or road vehicles, where relatively large space is available for equipments.

An embodiment of this human-machine interface proposes that visual display means is chosen among: visual display screen; panoramic display; head-up display; user worn visor or reticle; onboard instrument visual screen.

A noticeable advantage of this embodiment is to be compatible with high-end control, e.g. in latest generation vehicles such as recent helicopters.

Another object of the invention is a vehicle having a human-machine interface as mentioned above. In such a vehicle is for instance installed a human-machine interface implementing the above mentioned method.

E.g. the vehicle is chosen among: automotive, ship, submarine, railway, aircraft, spacecraft or industrial machines.

In an embodiment, the vehicle is a rotary wing aircraft.

Compared to the traditional operation involving only a mouse or a trackball, the invention is more immediate, faster and comfortable to the interface user. In addition, the invention saves the space of a conventional input device.

### Short description of the drawings.

Presently preferred embodiments of the invention are presented in the following description with reference to the attached drawings.
Figure 1 is a schematic view of an example of vehicle as per the invention, showing some operational concepts of touch-free gesture control with visual displays, steering devices and focal point reference marks on the displays, this vehicle being an aircraft and the gesture control being integrated into a cockpit of this aircraft.
Figure 2 is a schematic view of an example of the invention, showing an embodiment of optical gesture analysis with two cameras, one overhead and another one in lateral position, a focal point reference mark on a target location in a plane of pointing, and a trackball for micro-adjustments with activation switch.
Figure 3 is a schematic view of an example of the invention, showing an embodiment of optical gesture analysis with two cameras, one overhead and another one in frontal position, a focal point reference mark on a target plane of pointing, and a trackball for micro-adjustments with activation switch.
Figure 4 is a schematic view of an example of the invention, showing an embodiment of optical gesture analysis with two cameras, one in lateral position and another one in frontal position, as well as a focal point reference mark on a target plane of pointing, and a trackball for micro-adjustments with activation switch.
Figure 5 is a schematic view of an example of the invention, showing an embodiment of optical gesture analysis with two cameras in stereoscopic arrangement, both in overhead position, a focal point reference mark on a target plane of pointing, and a trackball for micro-adjustments with activation switch.
Figure 6 is a schematic view of an example of the invention, showing an embodiment of optical gesture analysis with two cameras in stereoscopic arrangement, both in frontal position, a focal point reference mark on a target plane of pointing, and a trackball for micro-adjustments with activation switch.
Figure 7 is a schematic view of an example of the invention, showing an embodiment of baseline for the analysis of data from a lateral camera in order to determine the intersection line on the target plane of pointing.
Figure 8 is a schematic cross section view of an example of the invention, showing an embodiment of a human operated control device of the tactile type with an integrated trackball system.
Figure 9 is a schematic view of an example of the invention, showing an embodiment with a user's body part position in successive attitudes (a-c) positions for a POINTING gesture as seen from different cameras.
Figure 10 is a schematic of an example of the invention, showing an embodiment with users body part position in successive attitudes (a-b) positions for a ZOOM IN / ZOOM OUT gesture as seen from a front camera.
Figure 11 is a schematic view of an example of the invention, showing an embodiment with users body part position in successive attitudes (a-b) positions for a ROTATE gesture as seen from a front camera.
Figure 12 is a schematic view of an example of the invention, showing an embodiment with users body part in successive attitudes (a-i) positions for a MOVE LEFT/MOVE RIGHT gesture, as seen from front, lateral and overhead camera positions. Example of a MOVE UP/MOVE DOWN gesture could be similar but with 90° rotated hand.
Figure 13 is a schematic view of an example of the invention, showing an embodiment with users body part in successive attitudes (a-c) positions for an ACTIVATE POINTING FOCUS gesture as seen from a right (a), front (b), and top camera (c).
Figure 14 is a schematic view of an example of the invention, showing an embodiment with a body part in successive attitudes (a-c) positions for an OKAY gesture as seen from a right (a), front (b), and top camera (c).

### Detailed Description of Illustrated Embodiments.

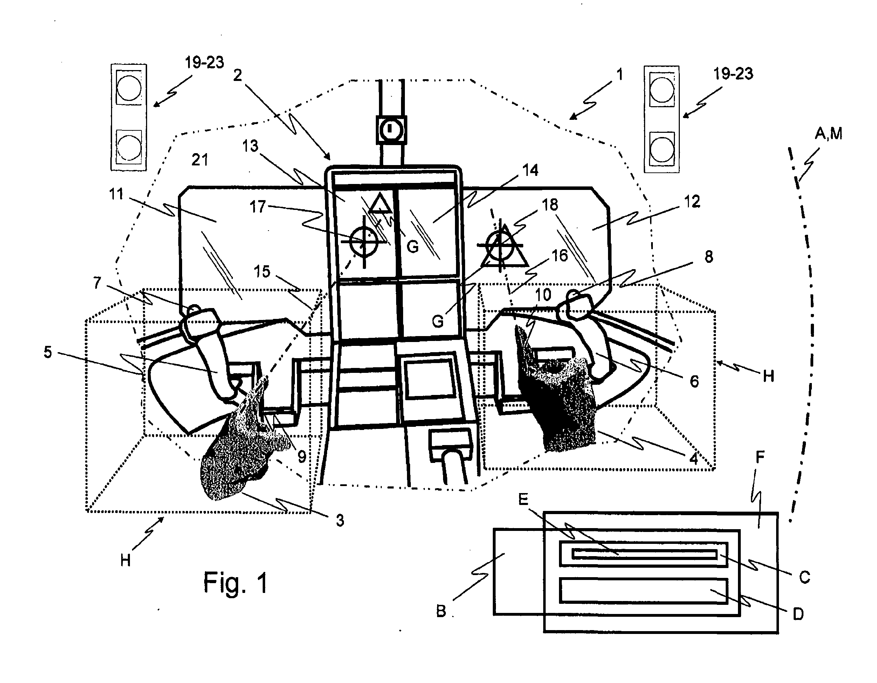

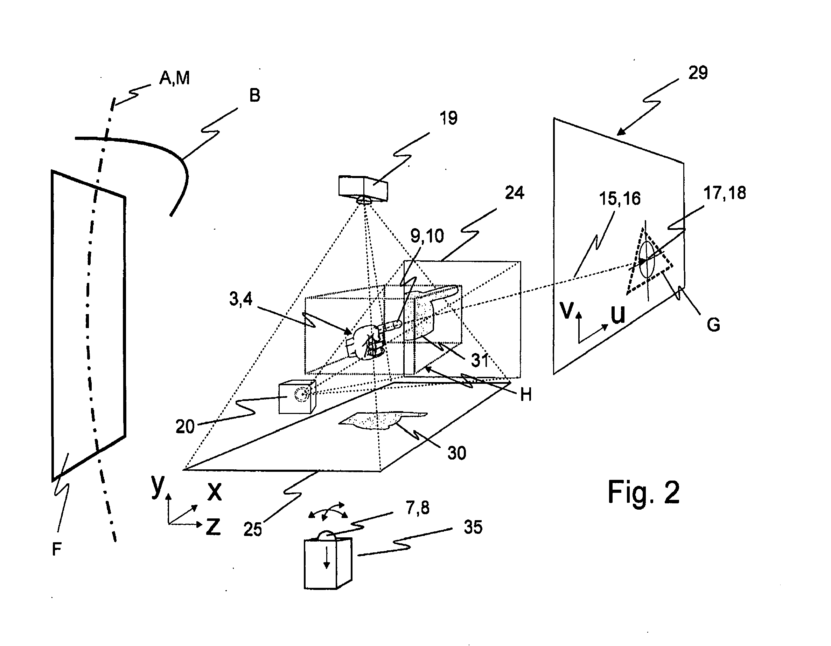

On figure 1 and 2, a vehicle A is illustrated. In this example, the vehicle A is an aircraft, more precisely a rotary wing aircraft such as a helicopter. The vehicle A is having a human-machine interface F. The reference M designates a method of operating such a human-machine interface F for operating controlling functions, as per the invention.

In examples, for defining in 3D space, the gestures /positions involved by the invention, three mutually orthogonal directions X, Y and Z are depicted in figures 2-7. A first direction Z, referred to as "depth" direction, generally corresponds to the front /back direction of the structures described. Terms such as front/rear are relative thereto. Another direction X is referred to as being "transverse", and generally corresponds to the width or lateral dimension of the structures described. The terms "side" or "left" /"right" are relative thereto. Yet another direction Y, referred to as being "height", generally corresponds to the elevation dimension of the structures described. Terms such as "up" / "down" are relative thereto. The directions X, Y and Z define together a referential "XYZ" .

On figure 1, a human-machine interface F is fully onboard the vehicle A and is provided for its control. Reference number 1 generally designates an interface environment for the human-machine interface F. The interface environment 1 in the example of vehicle A on figure 1 is a cockpit. On figure 1, two human users are schematically shown through body parts 3-4. In the illustrations, these body parts are the left hand 3 of a left seat user and a left hand 4 of a right seat user in the vehicle A. Of course, one or more body parts can be captured as per the invention. Inversely, on figure 2, only one hand 3, 4 is used for touch-free control.

Generally speaking, the human-machine interface F includes visual display means 2, human operated control devices 5-10, 35 and a computer system B. This computer system B classically includes a processing unit D, a non-transitory computer-readable unit C containing a software program E capable of executing operating computer-commands. When executed, said computer-commands causes the processing unit D to automatically perform control instructions so as to provoke controlling functions of said human-machine interface F.

In example of figure 1, this visual display means 2 are part of the interface environment 1. This visual display means 2 are located by a dashboard of the cockpit. On figure 1, the visual display means 2 include: a left hand lateral display 11, a right hand lateral display 12, a left center display 13 and a right center display 14. The visual display means 2 (11-14) of figure 1 include touch screen functionality in embodiments.

In examples of the invention, the visual display means 2 comprise at least one visual display means, chosen in the following list: visual display screen e.g. touchscreen; panoramic display e.g. windshield / lateral window ghost surface; head-up display e.g. transparent extensions on top / lateral of the dashboard; user worn visor or reticle e.g. helmet-mounted display; onboard instrument visual screen.

In example of figure 1, the human-machine interface F includes tactile human operated control devices 5-10: a left tactile control device 5, a right tactile control device 6, and two trackballs 7, 8 (respectively on device 5 and 6) with activation switches. Also, the human-machine interface F includes a human operated control device 35, of the tactile type forming a trackball device (with trackballs 7, 8)

The invention further proposes using touch-free control for provoking some of the controlling functions, via preselected body part(s) motions. In that purpose, a predetermined controlling function to be enabled is associated to a given hand gesture.

For instance, such motions are defined by a pointer 9 linked to the left side hand 3 and a pointer 10 linked to the right side hand 4.

In this purpose, the invention monitors preselected motions of said human users body part(s) (e.g. hands 3-4), at distance, by human operated but non tactile control devices, in the form of touch-free instant location capture means 19-23, and while knowing an exact 3D position of the instant location capture means 19-23.

The touch-free gesture control as per the invention is a comfortable means of operating the controlling functions that are rendered visible on one or a plurality of visual displays means 2, by moving selected body portions (hands 3,4) under the vision operated by the touch-free instant location capture means 19-23.

By moving the pointers 9 and 10 as well as corresponding pointing axis 15 for hand 3 and 16 for hand 4 (i.e. a longitudinal direction of the pointing finger 9 from the hand 3 and a longitudinal direction of the pointing finger 10 from the hand 4), a focal point reference mark 17 directed by the left user on a group of left displays means 2 and another focal point reference mark 18 directed by the right operator on right hand lateral display 12 of a group of right displays means 2, can be moved as well. The pointing is shown to be direct as the intersection of a 3D prolongation in axes 15 and 16 of the pointers with the display planes (i.e. the plane of display 12 in the case of the right user, the plane of the left center display 13 in the case of the left user).

As an example for a backup device for micro-movements of the focal point reference mark(s) and for activation of controlling functions, the left and right human operated control devices 5 and 6 are equipped with the corresponding trackballs 7 and 8 each having a respective activation switch.

Now, the instant location capture means are depicted by reference numbers 19-23 are now explained in reference to the figure 2-7.

In the example of figure 2, the instant location capture means 19 and 20 include a set of optical cameras (visual and/or infrared range of frequencies). As explicated above, the computer system B through its processing unit D is performing computer vision algorithms (i.e. in software program E) in order to interpret and geometrically position the gestures and to project the pointer of each relevant gesture (i.e. used or activated) to the focal point reference mark(s) onto the appropriate display 2 (11-14).

Depending on the selected configuration, different computer vision algorithms are applied. In the case of dual cameras, the correlation/correspondence between the two cameras can be computed by the help of Epipolar geometry (See: http://en.wikipedia.org/wiki/Epipolar geometry) using a fundamental matrix describing the geometry of the two cameras; in the case of three cameras the correlation/correspondence can be computed by help of trifocal geometry using a trifocal tensor describing the geometry of the three cameras.

From Figure 2, a gesture recognition device of the invention is an optical gesture analysis with two cameras in different positions: camera 19 is overhead, and camera 20 is in lateral position. Figure 2 shows also a focal point reference mark 17, 18 at position <u, v> on a target image G (through which an associated controlling function is visualized) on a visual display plane 29 of pointing onto the convenient visual display means, and a human operated control device 35 of the tactile type forming a trackball device (with trackball 7, 8) with activation switch as a backup for micro-adjustments and function activation. The reference numeral 24 represents the image viewed by the instant location capture means formed by the camera 20 with the representation 31 of the users hand 3 / 4 (cf. Fig. 1) with the pointer 9 / 10. The reference numeral 25 represents the image viewed by the instant location capture means formed by the camera 19 with the representation 30 of the users hand 3 / 4 (cf. Fig. 1) with the pointer 9 / 10.

In alternative embodiments, instant location capture means include 3D scanning devices. For instance, such instant location capture means are chosen among: 3D laser scanners, 3D infrared laser scanners, 3D ultrasonic scanners, or 3D radar scanners. Thus, 3D scanning devices could be applied instead of the multi camera recognition as well, and these are considered to be variants of the invention.

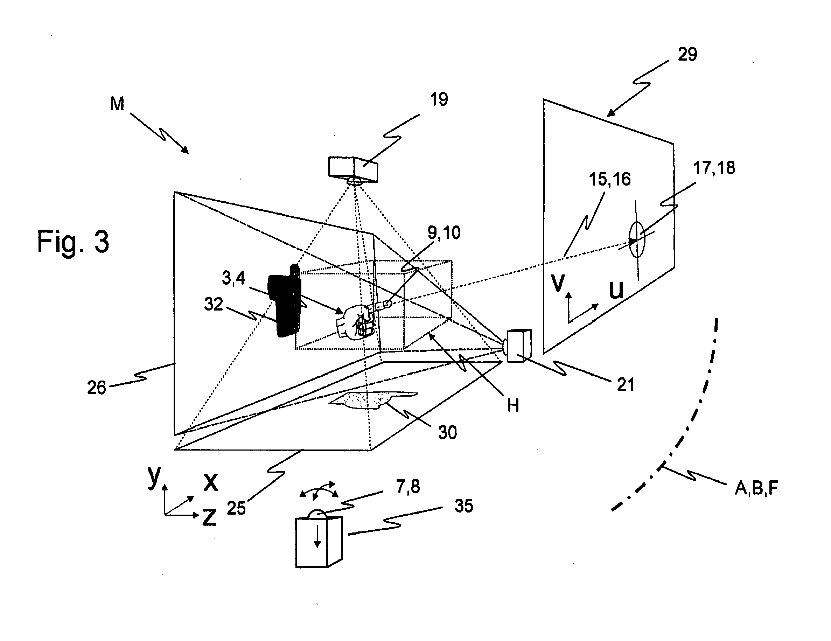

From Figure 3, another embodiment shows two instant location capture means 19, 21 also formed by cameras but in other positions: camera 19 is overhead as in Fig. 2 and camera 21 is in frontal position. The reference numeral 26 represents the image viewed by the instant location capture means formed by the camera 21 with the representation 32 of the users hand 3 / 4 (cf. Fig. 1) with the pointer 9 / 10, and the reference numeral 25 represents the image viewed by the instant location capture means formed by the camera 19 with the representation 30 of the users hand 3 / 4 (cf. Fig. 1) with the pointer 9 / 10.

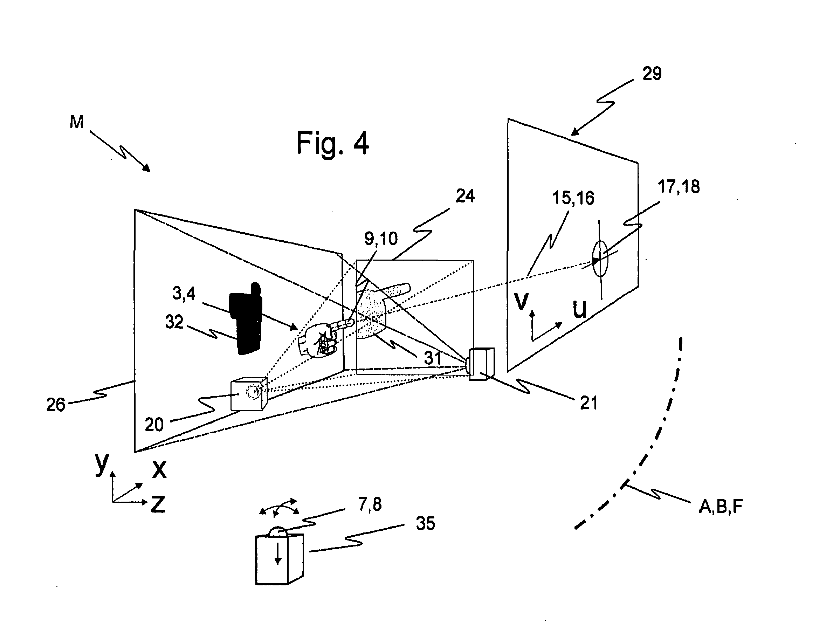

From Figure 4, is shown still another embodiment with two instant location capture means formed by cameras, in an arrangement distinct from previous ones. On figure 4: camera 20 is in lateral position as in Fig. 2 and camera 21 is in frontal position as in Fig. 3. Again, the focal point reference mark 17, 18 are located at position <u, v> on the G (see Figures 1-2) of the visual display plane of pointing 29. Reference 35 designates a trackball device (with trackball 7, 8) having activation switch and serving as a backup control for micro-adjustments and function activation. The reference numeral 26 represents the image viewed by camera 21 with the representation 32 of the operator hand 3 / 4 (cf. Fig. 1) with the pointer 9 / 10, and the reference numeral 24 represents the image viewed by camera 20 with the representation 31 of the operator hand 3 / 4 (cf. Fig. 1) with the pointer 9 / 10.

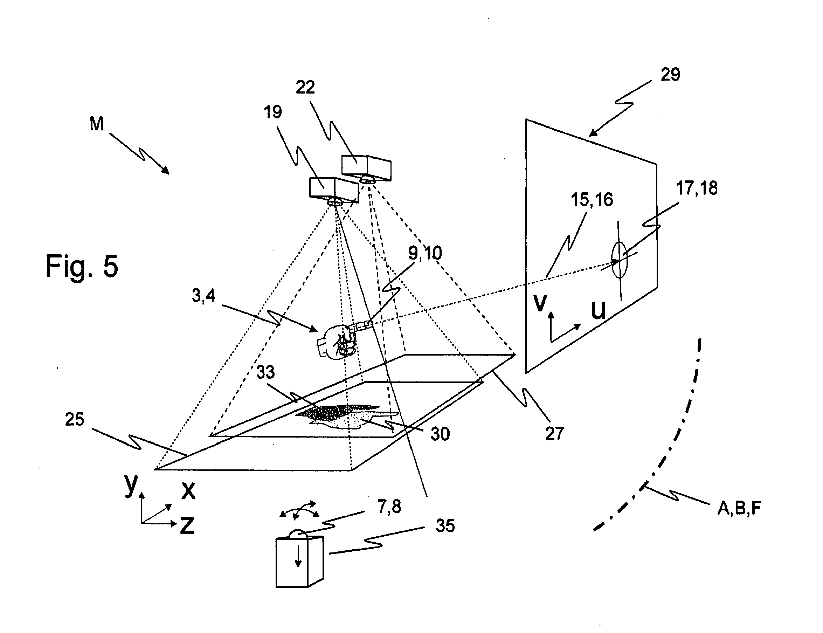

Figure 5 shows an embodiment where two instant location capture means formed by cameras 19, 22 are in stereoscopic arrangement. Both cameras 19 and 22 are in overhead/top position. Again, the focal point reference mark 17, 18 are located at position <u, v> on the target plane of pointing 29, and a trackball device 35 (with trackball 7, 8) with activation switch is shown. The plane 25 represents the image viewed by camera 19 with the representation 30 of the users hand 3 / 4 (cf. Fig. 1) with the pointer 9 / 10, and the reference numeral 27 represents the image viewed by camera 22 with the representation 33 of the users hand 3 / 4 (cf. Fig. 1) with the pointer 9 / 10.

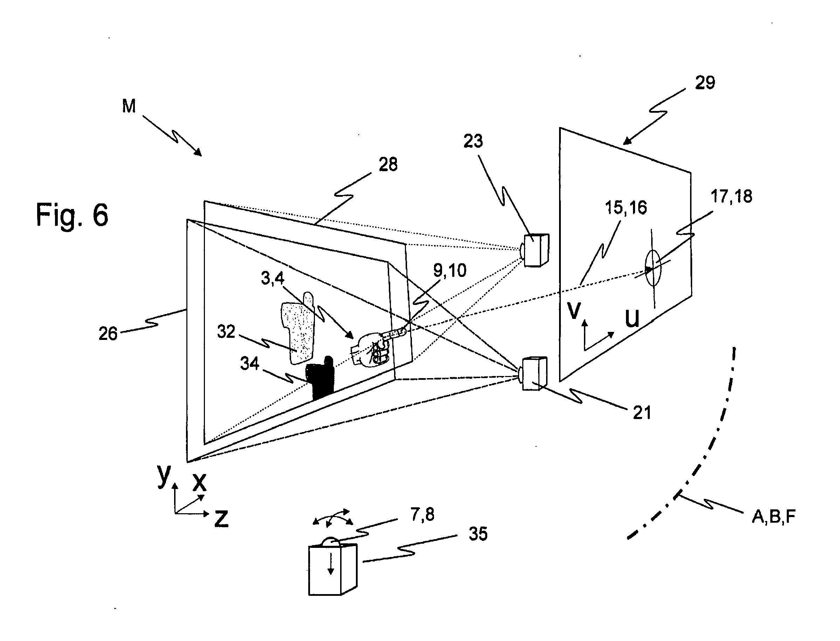

Figure 6 shows an embodiment with two instant location capture means formed by cameras 21 and 23 also in stereoscopic arrangement. Both cameras 21, 23 are in frontal position. As in the figures 2 to 5, the focal point reference mark 17, 18 are located on the target plane of pointing 29, and a trackball device 35 (with trackball 7, 8) with activation switch is shown. The plane 26 represents the image viewed by camera 21 with the representation 32 of the operator hand 3 / 4 (cf. Fig. 1) with the pointer 9 / 10, and the reference numeral 28 represents the image viewed by camera 23 with the representation 34 of the operator hand 3 / 4 (cf. Fig. 1) with the pointer 9 / 10.

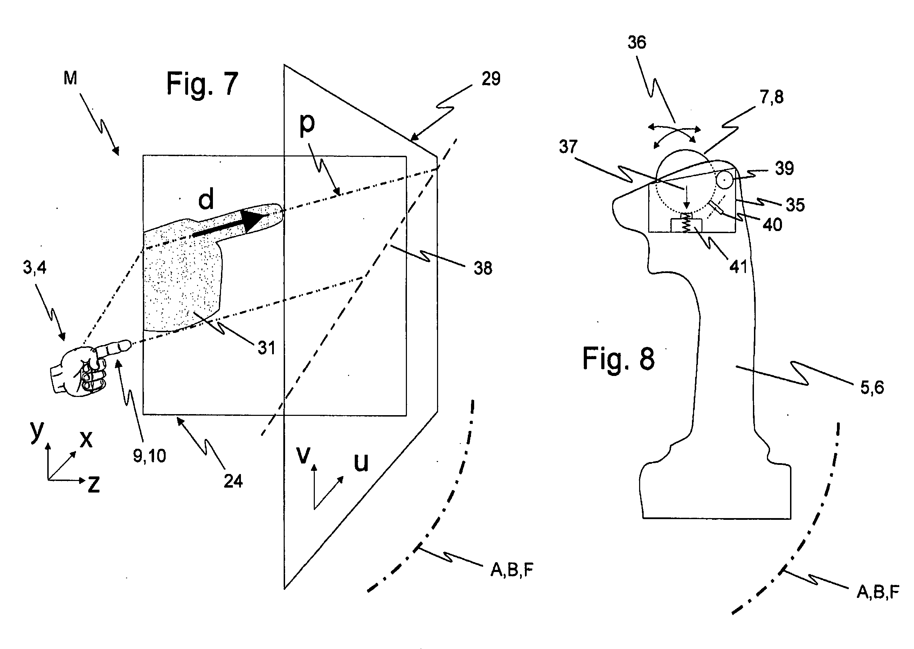

Knowing the exact 3D position of each instant location capture means (the example is with a lateral camera), the image 31 of the operator hand 3, 4 in the camera image 24 can be analyzed with respect to the gesture and especially in the example shown in Figure 7 with respect to the direction "d" of the pointers 9, 10.

This analysis results in the setup of a plane "p" (figure 7) in the 3D space defined by directions XYZ. The intersection of this plane "p" with the target plane of pointing 29 yields the intersection line 38. A plane similar to plane "p" is set up with the second camera and the intersection of this second similar plane with the target plane yields another intersection line. Now, the intersection of these two intersection lines results in a 3D location point which is assigned as the focal point reference mark for pointing and can be marked on the convenient display means 2.

The example of figure 8 shows an example of a human operated control device forming embodiments of tactile control devices 5, 6 with an integrated trackball as a backup for the gesture control device. The instant location capture means include angular sensors 39-40. The trackball 7, 8 can be rolled/rotated in any direction 36. Rolling the trackball leads to moving the angular sensors 39 and 40 in order to determine the degree and direction of the rotation. Pressing down 31 of the trackball activates a switch 41 which is the signal to activate a function. The trackball is returned to its original position by a tension spring 41.

From the above, embodiments of the method M as per the invention are generally exposed.

The method M proposes operating a human-machine interface F for controlling a vehicle A, for instance a rotary wing aircraft. When executed, the method M automatically performs control instructions so as to provoke controlling functions of said human-machine interface F.

The method M of the invention proposes using touch-free gesture control for provoking controlling functions, via a remote monitoring of body parts gestures made by the human user of said human-machine interface F. As exposed above, the remote monitoring is made by human operated control devices in the form of instant location capture means (19-23). Knowing the exact 3D position of each instant location capture means, the method M automatically proceed with:
- calculating a series of geometrical position data of said hand gesture relatively to said exact 3D position;
- from said calculated geometrical position data, presenting a focal point reference mark (17-18) on an G location onto at least one convenient visual display means 2, among all the visual display means (11-14);

- when at least a controlling function actuator (representing a controlling function of said human-machine interface F) on said convenient visual display means 2, 11-14 is in coincidence with said focal point reference mark 17-18, the method M is recognizing from said calculated geometrical position data whether or not said hand gesture is an intentional controlling motion to be interpreted as a controlling instruction for a controlling function of said human-machine interface F; and
- if said hand gesture is recognized as a controlling motion, interpreting said hand gesture into controlling instructions for the human-machine interface F.

In the illustrated embodiments, the method M proposes that said calculating of geometrical position data is made only for hand gestures. In an example, such a hand gesture should be made within a 3D predefined motion box H (figures 1-2), to be possibly recognized as a controlling motion. A "predefined motion box " H is defining a finite volume in the human-machine interface into which said hand gesture has to occur to be considered as control instructions to be interpreted.

In an embodiment, this method proposes that for at least one preselected controlling function, an elapsed predetermined still duration in calculating of a series of lastly calculated geometrical position data is to be interpreted as a controlling instruction for this preselected controlling function, such that said data remains stable, thus signifying that at most negligible hand gesture occurred. This results in that, when the focal point reference mark is maintained stable on a location of the convenient visual display 2, 11-14 corresponding to a given controlling function that is determined (by parameters of the method M) to be launched when constantly pointed during a predetermined time (e.g. 5 seconds), the method M does not require other inputs than still pointing to proceed accordingly.

Another example of application of still pointing provides that, said preselected controlling function involves that an elapsed predetermined still duration is to be interpreted as a non-activity - non-movement period, signifying that the instant pointing location is not intentional or announcing a forthcoming call for controlling function. So as to avoid superfluous occupying of the visual display means 2 by unused focal point reference mark 17-18, this non-activity - non-movement period is started e.g. whenever a given new geometrical position is calculated, and if no hand gesture relatively to said exact 3D position is tracked during said non-activity - non-movement period, an outstanding projecting focal point reference mark disappears from onto said convenient visual display means 2. In embodiments, the non-activity - non-movement period - is predetermined to 5 seconds.

In an embodiment, where at least one human-operated control device is in the form of a physically operated control system such as a the trackball 35 with one or a plurality of touch activation switch, the method M provides a back-up function for micro-movements of the focal point reference mark 17-18 which is operated via a physical actuation by said user of said touch activation switch.

In another example where the human-machine interface F is further having at least one physically operated control system such as a the trackball 35 with one or a plurality of touch activation switch (e.g. 7-8 on Figure 1; 8), the method M enables a final validation stage which is operated via a physical activation by said user of said touch activation switch (es), finalizing said interpreting into executable instructions for the human-machine interface F.

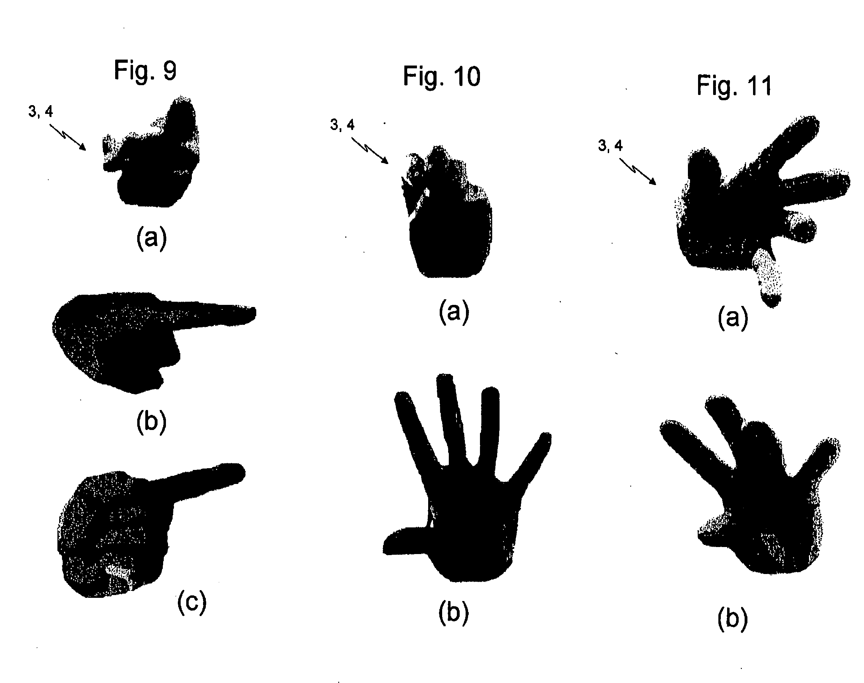

For illustrating available controlling functions to which touch-free actuation is operated, the example of figure 9 shows an embodiment for the POINTING gesture of hands 3 / 4 as seen from a front camera (a), an overhead/top camera (b), and from a lateral camera (c).

The example of figure 10 shows an example for a ZOOM IN/ZOOM OUT gesture of hands 3 / 4 as seen from a front camera. The sequence first (a), then (b) can be interpreted as a ZOOM IN, the opposite sequence first (b), then (a) can be interpreted as a ZOOM OUT.

The example of figure 11 shows an example of a possible ROTATE gesture of hands 3 / 4 as seen from a front camera. The movement from (a) to (b) can be interpreted as the instruction for a clockwise rotation, the movement from (b) to (a) can be interpreted as the instruction for a counter-clockwise rotation.

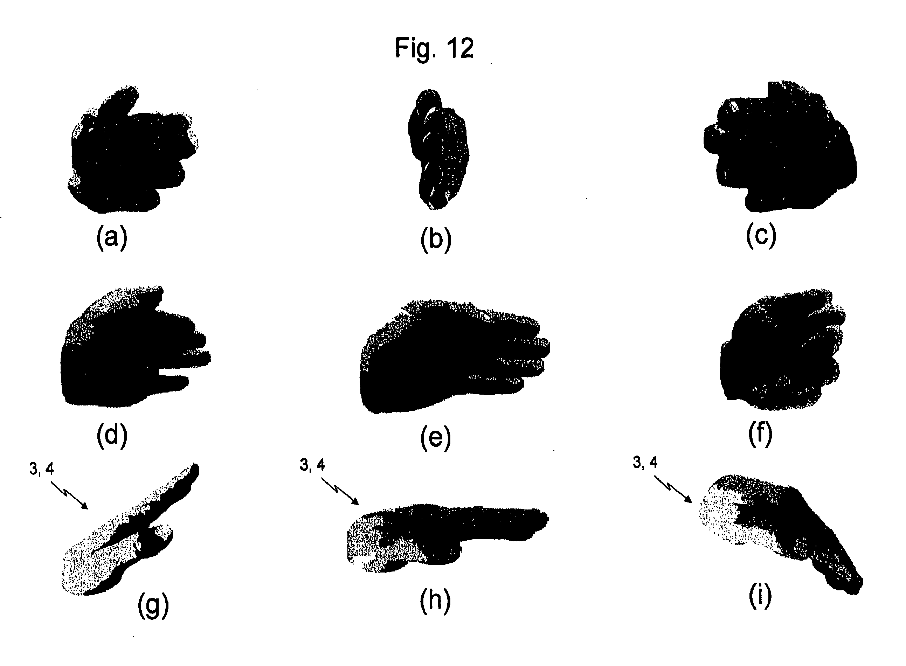

The example of figure 12 shows an example of a MOVE RIGHT gesture of hands 3 / 4 as seen from the front (a) - (b) - (c), the lateral (d) - (e) - (f), and the overhead camera positions (g) - (h) - (i). The MOVE LEFT gesture in this example would be in the opposite sequence: (c) - (b) - (a), (f) - (e) - (d), (i) - (h) - (g), respectively.

A so-called MOVE UP/MOVE DOWN gesture could be similar but with the hand rotated 90°.

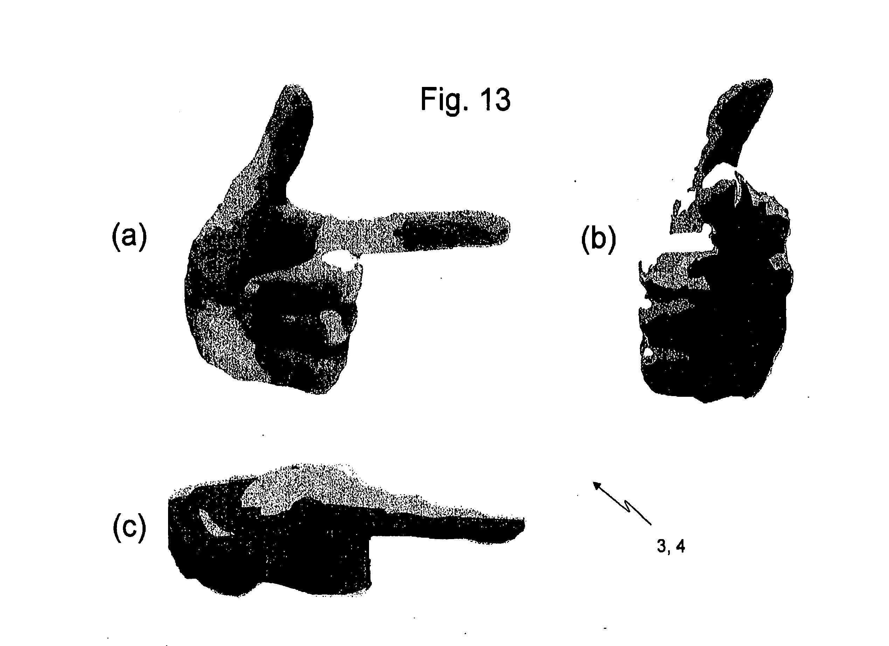

The example of figure 13 shows an example of an ACTIVATE POINTING FOCUS gesture of hands 3 / 4 with thumb up and stretched out pointing finger as seen from a right (a), front (b), and top camera (c).

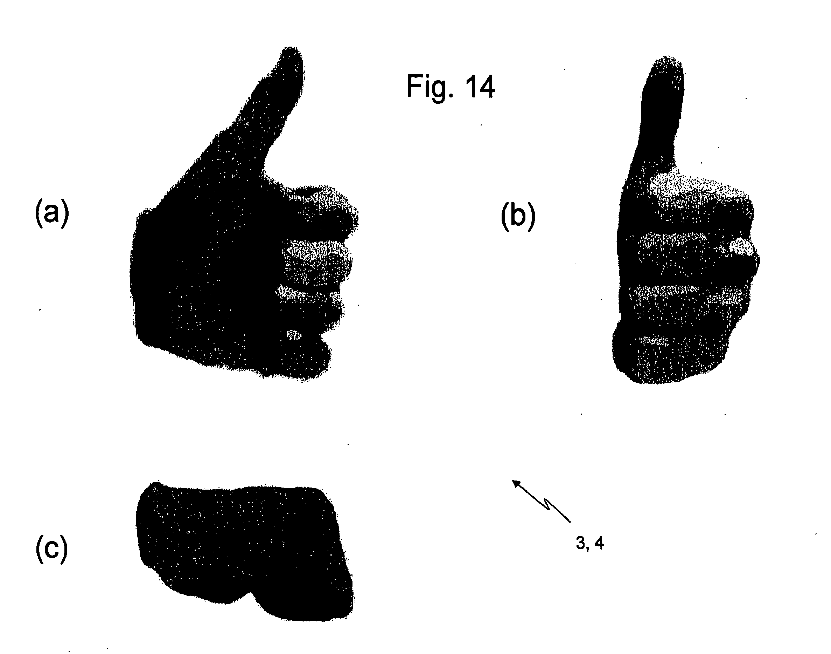

The example of figure 14 shows an easy to interpret example of an OKAY gesture of hands 3 / 4 as seen from a right (a), front (b), and top camera (c).

To summarize the illustrated embodiments, it is recalled that an optional trackball (or an equivalent gesture operated control device) with tactile activation switch might serve as a backup for the case that there is a pointing, synchronization or interpretation error of the gesture recognition. A touchscreen functionality of the displays/screens might be an additional fail-safe solution for the case of a major pointing failure of touch-free gesture operated control devices.

The gesture which needs the most reliable interpretation is the pointing gesture of hands 3 / 4 with the pointing finger of the pilot/driver/operator as the pointer. Further gestures might be the "ZOOM IN/ZOOM OUT gestures", the "ROTATE gesture», the "MOVE LEFT/MOVE RIGHT/MOVE UP/MOVE DOWN gestures", the "ACTIVATE POINTING FOCUS gesture", and the "OKAY gesture". Of course, other useful gestures might be added to this list.

The at least two cameras might be arranged in a stereo configuration (almost parallel bisectors of the camera viewing angle) or in a kind of multi-view configuration (the bisectors of the cameras viewing angles meeting in the middle between pilot and screen, and arranged with an angle between 30° and 140°).

The view of the cameras 19-23 should cover a predefined motion box of the user(s) gestures, e.g. of users hand(s) /finger(s).

In the case of a POINTING gesture, a focal point reference mark 17-18 is projected and displayed as a focal point mark at the corresponding position on the target plane G (i.e. the screen to which the pointer directs). Of course, the movement of the pointer needs to be tracked by the gesture control system and the changes of the corresponding focal point marks need to be displayed without much delay.

Activation of the micro-movements of the focal point for fine-tuning of the focal point position can be achieved either with the ACTIVATE POINTING FOCUS gesture of hands 3 / 4 or with help of the trackball (or an equivalent device) with activation switch by the first click of the activation switch.

The fine-tuning of the focal point position 17-18 itself can be performed after activation either by the pointer of the gesture with a micro-scaling (i.e. big movements of the pointer are scaled down to small movements of the focal point) or with help of the tactile gesture operated control device.

The OKAY gesture of hands 3 / 4 is used for activation of the corresponding function at the focal point position. Alternatively a click on the trackball switch is used for such activation. Of course, instead of the trackball switch an additional switch in the vicinity of the tactile gesture operated control device can be installed and used.

The processing unit performs computer vision algorithms with the target of identifying the gesture and the geometric position of the pointer if the gesture is a POINTING gesture. For this purpose, the hand of the driver/pilot/operator needs to be isolated in the images of the cameras and geometrically related in order to determine the three dimensional orientation of the fingers.

For identification of the positional change of the orientation of the fingers which is necessary for determining certain gestures (the "ZOOM IN/ZOOM OUT gesture", the "ROTATE gesture", and the "MOVE LEFT/MOVE RIGHT/MOVE UP/MOVE DOWN gesture") and for following the pointer in the case of the POINTING gesture, tracking of the hand and the fingers for a certain time (e.g. for 1-5 seconds) is required.

If there is no activity for the focal point (no movement of the pointer, no further gestures - i.e. no ZOOM IN/ZOOM OUT gesture", no "ROTATE gesture", and no "FORWARD/BACKWARD gesture" -, and no activation of the underlying function) the focal point on the target G of the convenient "screen" disappears after a certain period of time (e.g. after 1-5 seconds).

The target plane or the target screen respectively, can be one of the head-down screens (e.g. the transparent displays - the so called extensions to the dashboard - according to EP2361832), a head-up screen (e.g. a display integrated into the windshield), or even a helmet mounted display. In the case of the helmet mounted display or with activated micro-movements of the focal point, the gestures performed by the driver/pilot/operator need an indirect interpretation with respect to the pointer (which means that the direction of the pointer is not directed to the real screen but to a virtual plane in front of the hand motion box of the user, and the scaling of the movement of the focal point mark is not 1:1 with the pointer movement), while in the other cases the pointing is direct. Direct pointing means that the intersection of the "prolongation line" of the pointer with the real target plane of pointing determines the position of the focal point.

With the invention, a human-machine interface F which is an interactive data transfer arrangement which is used for controlling a vehicle, operates human real-time piloting of such a vehicle, either from an onboard controlling post (e.g. a cockpit) and / or from a controlling post which is remote from the vehicle (e.g. an r/c or drone control device).

Another possibility of the invention is controlling a simulated machine through a virtual human-machine interface. Such a simulation is not actually operating the machine e.g. is in a mock-up structure either for teaching practice of an existing human-machine interface / for testing a modified or new human-machine interface / for designing and producing of a forecasted human-machine interface.

The invention may be subjected to variations as to its implementation, said variations not being possibly identified exhaustively. For instance, some illustrated embodiments propose that the convenient screen is determined through direction of a pointing finger. In embodiments, the convenient display depending on a routine recorded in the software program. For instance, in an informative general function the convenient display may be allocated in advance by said routine. An example may be overall geographical information that requires a wide screen color display. Another example may be a tactical aiming in a military aircraft that may be allocated to a head-mounted display. Selection of convenient display may also involve tactile contact with a switch. Similarly, depending on embodiments, a displayed controlling function is selected before actual activation, by various manners, such as a given user gesture, elapsed countdown period while the corresponding image is pointed on the convenient display 2, or via a tactile click. Other usual possibilities are within reach of the skilled person of the art.

Similarly, the position of the instant location capture means 19-23 is considered as fixed. In embodiments, a positional initializing step of checking and (if required) updating in the memory unit C, the actual location of the instant location capture means 19-23 within the environment is executed.

### Listing of references signs of the drawings.

| | |
|---|---|
| A | Vehicle, e.g. aircraft like rotary wing aircraft |
| B | Computer system |
| C | Memory means |
| D | Processing means |
| E | Program software including algorithm |
| F | Human machine interface (HMI) |
| G | Target image of controlling function |
| H | Predetermined 3D motion box |
| M | Method of operating a human-machine interface |
| X | Transverse direction |
| Y | Height direction |
| X | Depth direction |
| u | Transverse direction in Target Plane of Pointing 29 |
| v | Height direction in Target Plane of Pointing 29 |
| 1 | Interface environment (e.g. Cockpit of a helicopter) |
| 2 | Visual Display Means (see 11-14) |
| 3 | Left body part of left user (left hand of left user) |
| 4 | Right body part of right user (left hand of right user) |
| 5 | Gesture operated control device (Left steering device) |
| 6 | Gesture operated control device (Right steering device) |
| 7 | Gesture operated control device Trackball |
| 8 | Gesture operated control device Trackball |
| 9 | Gesture operated control device touch-free Pointer (left side hand) |
| 10 | Gesture operated control device touch-free Pointer (right side hand) |
| 11 | Left hand lateral display of Visual Display Means 2 |
| 12 | Right hand lateral display of Visual Display Means 2 |
| 13 | Left center display of Visual Display Means 2 |
| 14 | Right center display of Visual Display Means 2 |
| 15 | Projection axis from the pointer 9 |
| 16 | Projection axis from the pointer 10 |
| 17 | Focal point reference mark (left user) |
| 18 | Focal point reference mark (right user) |
| 19 | Instant Location Capture Means: Top / overhead camera |
| 20 | Instant Location Capture Means: Right Side camera |
| 21 | Instant Location Capture Means: Front camera |
| 22 | Instant Location Capture Means: Second top/overhead camera |
| 23 | Instant Location Capture Means: Second front camera |
| 24 | Scene image registered with Instant Location Capture Means 20 |
| 25 | Scene image registered with Instant Location Capture Means 19 |
| 26 | Scene image registered with Instant Location Capture Means 21 |
| 27 | Scene image registered with Instant Location Capture Means 22 |
| 28 | Scene image registered with Instant Location Capture Means 23 |
| 29 | Target plane of pointing |
| 30 | Identified image of the gesture operated control device in scene 25 |
| 31 | Identified image of the gesture operated control device in scene 24 |
| 32 | Identified image of the gesture operated control device in scene 26 |
| 33 | Identified image of the gesture operated control device in scene 27 |
| 34 | Identified image of the gesture operated control device in scene 28 |
| 35 | Gesture control system e.g. trackball with activation switch(-es) |
| 36 | Freedom of rotations for the system 35 |
| 37 | Freedom of vertical movement for pressing the activation switch |
| 38 | Intersection line between plane "p" with target plane 29 |
| 39 | Angular sensor for movements of 35 in forward/backward direction |
| 40 | Angular sensor for movements of 35 in left/right direction |
| 41 | Activation switches with tension spring. |

## Claims

1. Method (M) of executing controlling functions of a human-machine interface (F) for a vehicle (A); said human-machine interface (F) including: visual display means (2) onto which controlling functions are visualized, human operated control devices (5-10; 19-23) for enabling human actuation of at least an associated controlling function, by at least a human user of the human-machine interface (F) and a computer system (B); said computer system (B) includes a processing unit (D), a non-transitory computer-readable unit (C) containing a software program (E) for executing instructions-commands; for enabling actuating of said controlling functions, said human operated control devices (5-10; 19-23; 35) is operated via a body part of said human user;
**characterized in that** the method (M) associates at least a predetermined controlling function to at least a corresponding controlling gesture of at least a hand (3-4) of said human user; said human-machine interface (F) including instant location capture means (19-23) for touch-free monitoring gestures of said hand (3-4) and being logically connected to said computer system (B); said instant location capture means (19-23) performing a computer vision of said hand controlling gesture based upon which said computer system (B) is executing a computer vision algorithm in said software program (E), while knowing an exact 3D position of each instant location capture means (19-23), including:
- calculating geometrical position data of said gesture of the hand (3-4) relatively to said exact 3D position;
- from said calculated geometrical position data, presenting a focal point reference mark (17-18) on a target location (G) onto at least one convenient visual display means (2) among all the visual display means (2);
- when at least an associated controlling function which is virtualized on said convenient visual display means (2) is in coincidence with said focal point reference mark (17-18), recognizing from said calculated geometrical position data whether or not said gesture of the hand (3-4) is a controlling gesture to be interpreted as the associated controlling instruction; and
- if said gesture of the hand (3-4) is recognized as said associated controlling gesture, interpreting said gesture into corresponding controlling instructions for the human-machine interface (F).

2. Method (M) according to claim 1,
**characterized in that** that an ACTIVATE POINTING FOCUS gesture is monitored remotely by said instant location capture means (19-23) with a thumb of said hand (3-4) oriented up, an opposed finger of said hand (3-4) stretched out pointing at said target location onto said convenient visual display means (2) and remaining opposed fingers folded and turned inwards a palm of said hand (3-4); this ACTIVATE POINTING FOCUS gesture being associated to a controlling instruction provoking micro-movements of the focal point reference mark (17-18) for fine-tuning of the position of this focal point reference mark (17-18) on the convenient visual display means (2).

3. Method (M) according to claim 1,
**characterized in that** that an OKAY gesture is monitored remotely by said instant location capture means (19-23) with a thumb of said hand (3-4) oriented up and opposed fingers of said hand (3-4) folded and turned inwards a palm of said hand (3-4); this OKAY gesture being associated to a controlling instruction provoking a validating actuation of a controlling function corresponding to the visualized target location on the convenient visual display means (2) in register with said focal point reference mark (17-18).

4. Method (M) according to claim 1 to 3,
**characterized in that** that said calculating of geometrical position data is made only for gestures of the hand (3-4) made within a predefined motion box (H), the predefined motion box defining a finite volume in an environment (1) of said human-machine interface (F) into which finite volume said gesture of the hand (3-4) has to occur to be considered by said instant location capture means (19-23) as an associated control instruction to be interpreted.

5. Method (M) according to claim 1 to 4,
**characterized in that** that for at least one associated controlling function, a predetermined still duration is measured by the method (M) by comparison of at least two series of lastly calculated geometrical position data; said gesture of the hand (3-4) being interpreted as a controlling instruction if such data remains stable until said predetermined still duration is elapsed, thus signifying that only negligible hand gesture occurred during said predetermined still duration.

6. Method (M) according to claim 5,
**characterized in that** said associated controlling function involves that an elapsed predetermined still duration is to be interpreted as a selecting controlling function.

7. Method (M) according to claim 5,
**characterized in that** said associated controlling function involves that an elapsed predetermined still duration is to be interpreted as a predetermined non-activity - non-movement period, such that the method (M) provokes an outstanding projecting focal point reference mark (17-18) to disappear from onto said convenient visual display means (2).

8. Method (M) according to claim 1,
**characterized in that** that said human-machine interface (F) is further having at least one human-operated control device in the form of a human operated control system (35) with at least a touch activation switch (7-8); said method (M) including a back-up function for micro-movements of the focal point reference mark (17-18) operated via a tactile actuation by said user of said human operated control system (35).

9. Method (M) according to claim 1,
**characterized in that** that said human-machine interface (F) is further having at least one human-operated control device in the form of a human operated control system (35) with at least a touch activation switch (7-8); said method (M) including a final validation stage operated via a tactile activation by said user of said human operated control system (35), finalizing said interpreting into controlling instructions for the human-machine interface (F).

10. Method (M) having a human-machine interface (F) according to claim 8;
**characterized in that** said method (M) is for pointing and controlling said Human-Machine Interface (F) virtually.

11. Human-machine interface (F) for a vehicle (A); said human-machine interface (F) including: visual display means (2) onto which controlling functions are visualized, human operated control devices (5-10; 19-23; 35) for enabling human actuation of at least an associated controlling functions, by at least a human user of the human-machine interface (F) and a computer system (B); said computer system (B) includes a processing unit (D), a non-transitory computer-readable unit (C) containing a software program (E) for executing instructions-commands; for enabling actuating of said controlling functions, said human operated control devices (5-10; 19-23; 35) are operated via a body part of said human user;
**characterized in that** for operating said human-machine interface (F) according to the method (M) of claim 1, at least a predetermined controlling function is associated to at least a corresponding controlling gesture of at least a hand (3-4) of said human user; said human-machine interface (F) including instant location capture means (19-23) for touch-free monitoring gestures of said hand (3-4), said instant location capture means (19-23) being logically connected to said computer system (B); said instant location capture means (19-23) performing a computer vision of said hand controlling gesture based upon which said computer system (B) is executing a computer vision algorithm in said software program (E), while knowing an exact 3D position of each instant location capture means (19-23); thus if said gesture of the hand (3-4) is recognized as said associated controlling gesture, said computer system (B) is interpreting said gesture into corresponding controlling instructions for the human-machine interface (F).

12. Human-machine interface (F) according to claim 11,
**characterized in that** said human-machine interface (F) is having at least one human operated control device (35) with at least one touch activation switch (7-8); said human operated control device (35) being arranged so as to allow for at least one controlling function of said human-machine interface (F) to be executed on tactile activation by said user of said human operated control device (35) for implementing at least one corresponding validation function of said human-machine interface (F).

13. Human-machine interface (F) according to claim 11,
**characterized in that** said human-machine interface (F) is having instant location capture means (19-23) including at least: a camera (19) overhead, and an outer lateral camera (20), said cameras (19-20) being in lateral stereoscopic position.

14. Human-machine interface (F) according to claim 11, **characterized in that** said human-machine interface (F) is having instant location capture means (19-23) including at least: a camera (19) overhead, and an inner lateral camera (21), said cameras (19-21) being in stereoscopic position.

15. Human-machine interface (F) according to claim 11,
**characterized in that** said human-machine interface (F) is having instant location capture means (19-23) including at least: a lateral camera (20) in lateral position, and a frontal camera (21) in frontal position, said cameras (20-21) being stereoscopic position.

16. Human-machine interface (F) according to claim 11,
**characterized in that** said human-machine interface (F) is having instant location capture means (19-23) including at least: two cameras (19; 22) both in overhead/top stereoscopic position.

17. Human-machine interface (F) according to claim 11,
**characterized in that** said human-machine interface (F) is having instant location capture means (19-23) including at least: two cameras (21; 23) both in frontal stereoscopic position.

18. Human-machine interface (F) according to claim 11,
**characterized in that** said human-machine interface (F) is having instant location capture means (19-23) including at least an optical camera chosen among: human visual spectrum, infrared range cameras.

19. Human-machine interface (F) according to claim 11,
**characterized in that** said human-machine interface (F) is having instant location capture means including 3D scanning devices, chosen among: 3D laser scanners, 3D infrared laser scanners, 3D ultrasonic scanners, or 3D radar scanners.

20. Human-machine interface (F) according to claim 11,
**characterized in that** at least one of said visual display means (2) is chosen among: visual display screen; panoramic display; head-up display; user worn visor or reticle; onboard instrument visual screen.

21. Vehicle (A) having a human-machine interface (F) according to claim 11,
**characterized in that** said Human-Machine Interface (F) is for controlling a vehicle (A), chosen among: automotive, ship, submarine, railway, aircraft, spacecraft or industrial machines.

22. Vehicle (A) according to claim 21,
**characterized in that** said vehicle (A) is a rotary wing aircraft.
